Europäisches Patentamt

European Patent Office

Office européen des brevets

(19)

(11) Numéro de publication: **0 022 390**
**B1**

(12) ## FASCICULE DE BREVET EUROPEEN

(45) Date de publication du fascicule du brevet: **27.04.83**

(21) Numéro de dépôt: **80400900.9**

(22) Date de dépôt: **18.06.80**

(51) Int. Cl.³: **G 06 K 1/12,** G 06 K 7/08,
G 06 K 19/06

(54) **Procédé de marquage et d'identification d'objets marqués par des éléments électriquement conducteurs.**

(30) Priorité: **26.06.79 FR 7916351**

(43) Date de publication de la demande:
**14.01.81 Bulletin 81/2**

(45) Mention de la délivrance du brevet:
**27.04.83 Bulletin 83/17**

(84) Etats contractants désignés:
**BE CH DE GB IT LI NL SE**

(56) Documents cités:
**FR - A - 2 149 219**
**GB - A - 595 764**
**US - A - 2 774 060**
**US - A - 3 986 104**
**US - A - 4 059 795**

**MACHINE MODERNE, no. 818, septembre 1977 Paris FR B. AUDENARD: "Tri électromagnétique de matériaux de récupération non ferreux", pages 150 et 151.**

(73) Titulaire: **IMPHY S.A.**
**8 rue de la Rochefoucauld**
**F-75009 Paris (FR)**

(72) Inventeur: **Lagarde, Pierre**
**18, rue de l'Orangerie**
**F-78000 Versailles (FR)**

(74) Mandataire: **Dupuy, Louis**
**CREUSOT-LOIRE 15 rue Pasquier**
**F-75383 Paris Cedex 8 (FR)**

Courier Press, Leamington Spa, England.

Procédé de marquage et d'identification d'objets marqués par des éléments
électriquement conducteurs

La présente invention concerne un procédé de marquage et d'identification d'objets normalement non-conducteurs de l'électricité et marqués par des éléments conducteurs; elle est plus particulièrement destinée à titre d'exemple à reconnaître l'authenticité de documents ainsi préalablement marqués et codés.

On sait actuellement détecter la présence d'un corps métallique conducteur de l'électricité dans une masse ou une zone ne renfermant normalement que des éléments non conducteurs. On utilise pour cela un générateur d'ondes électromagnétiques à haute fréquence présentant normalement une certaine impédance. Lorsqu'une masse conductrice, métallique par exemple, entre dans le champ d'émission, les courants de Foucault engendrés dans la masse absorbent une partie de l'énergie émise par le générateur et donnent lieu à l'émission d'une énergie réfléchie. La détection d'un tel signal de réponse, ou de la modification de l'impédance du système, décèle la présence d'une masse conductrice. De tels dispositifs sont par exemple utilisés pour la détection des mines enfouies dans le sol, ou encore pour des contrôles de sécurité dans les aéroports. Dans tous ces cas, où l'objectif visé est purement qualitatif, on ne cherche pas à mesurer les perturbations enregistrées. D'une manière générale l'état de la technique concernant la detection électromagnétique d'objets métalliques inclus dans des objets que l'on vent compter ou simplement détecter peut être illustré par les brevets US—A—2774060 et GB—A—595764. Un procéde de trí électromagnétique de matériaux métalliques est décrit dans la revue "Machine Moderne", no 818 (1977.09) p. 150—151, sous le titre: "Tri Electromagnétique de Matériaux de Récuperation non Ferreux", aucun des procédés décrits dans ces documents ne se rapporte au marquage et á l'identification d'objets grâce à un, code associé a la présence d'echantillons métalliques solidaires de, ces objets et présentant chacun des résistivités différentes. Le brevet FR—A—2 149 219 décrit une antenne de codage attachée à un objet devant être identifié. Cette antenne est constituée par une série d'emplacements pouvant recevoir des depôles métalliques illuminés par un émetteur radar et accordés à la fréquence dudit radar. Lorsque l'objet se déplace par rapport à l'émitteur radar, la présence ou l'absence de tels dipôles dans des emplacements choises entraîne la production d'une série de signaux refléchés dont la configuration, constitue le code d'identification de l'objet. Ce code d'identification n'est donc pas déterminé par la présence d'echantillons de conductibilites différentes; de plus, sa connaissance nécessite un déplacement de l'antenne de, codage, donc de l'objet, par rapport à la sowie de rayonnement.

La présente invention concerne une application nouvelle de ces moyens de détection, en vue de réaliser un marquage codé d'objets pour pouvoir ensuite les détecter et identifier le code apposé.

L'invention s'applique donc à un procédé de marquage et d'identification d'objets normalement non conducteurs de l'électricité, par inclusion préalable de masses conductrices et détection ultérieure de ces masses en faisant passer l'objet dans un champ électromagnétique produit par un générateur à haute fréquence, et mise en évidence de la variation de réponse du système, variation due aux courants de Foucault prenant alors naissance dans la masse conductrice. Selon l'invention, on utilise comme éléments de marquage au moins un fil métallique choisi chacun parmi une gamme prédéterminée d'échantillons de conductibilités électriques différentes, une valeur de code étant attribuée à chaque échantillon; on amène successivement chacune des zones de l'objet contenant un fil à être, selon la méme orientation, dans le champ électromagnétique, et on mesure chaque réponse enregistrée, chacune étant caractéristique d'un échantillon et d'une valeur de code, le code complet de l'objet étant alors constitué par la succession des valeurs de code élémentaires détectées pour chaque fil.

Selon un mode de réalisation particulier de l'invention, on utilise des échantillons de fils dont la résistivité est variable radialement, et pour la détection on amène successivement chacune des zones contenant un fil a être dans au moins deux champs électromagnétiques de fréquences différentes, et on compare les réponses enregistrées pour chaque fréquence.

L'invention sera mieux comprise en se référant à un mode de réalisation particulier donné à titre d'exemple et représenté par les dessins annexés.

La figure 1 représente schématiquement une "étiquette" réalisée selon l'invention.

La figure 2 est un schéma de réalisation d'une cellule de détection utilisant une antenne dipôle.

Les figures 3 et 4 donnent des schémas de cellules de détection utilisant un système triplaques. Le dispositif de la figure 3 est conçu pour analyser l'étiquette traversant les plaques perpendiculairement. Dans la figure 4, le passage de l'étiquette est parallèle aux plaques.

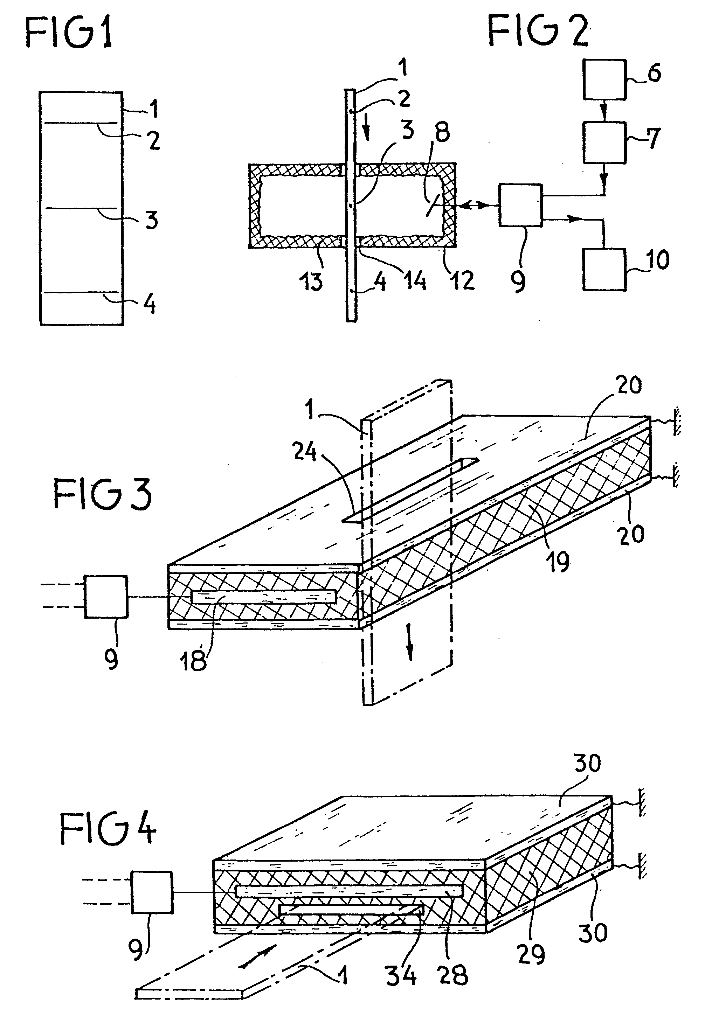

La figure 1 représente ce que nous appellerons par la suite une "étiquette" d'identification 1, étant entendu qu'il s'agit là d'un terme très général pour désigner aussi bien une étiquette proprement dite en papier ou en carton, destinée à être attachée à un objet plus volumineux, ou encore constituer l'objet en soi comme par exemple une carte en matière plastique.

L'étiquette 1 comporte dans sa masse des fils métalliques 2, 3 et 4, introduits lors de son élaboration, qui peuvent être identiques entre eux ou différents mais toujours choisis dans un échantillonnage prédéterminé. On trouvera dans cet échantillonnage des fils de résistivité électrique différente, et par exemple des fils de même diamètre mais élaborés à partir de métaux ou alliages différents. Ainsi le fil 2 pourrait être en cuivre de résistivité 1,8 $\mu\Omega$cm, le fil 3 en nickel de résistivité 7,2, et le fil 4 en alliage fernickel à 42% de nickel dont la résistivité est de 63.

La figure 2 représente schématiquement un dispositif de détection et d'identification de telles étiquettes. Ce dispositif est constitué par un oscillateur à balayage 6, par exemple un générateur Ferisol GH 300, suivi d'un isolateur 7 destiné à empêcher un retour vers le générateur 6. L'ensemble est connecté à une antenne dipôle quart d'onde 8 à travers un coupleur directif 9 auquel aboutit également un détecteur d'énergie 10. L'antenne 8 est incluse dans une cellule anéchoïde 12 tapissée intérieurement d'un matériau 13 absorbant les hyperfréquences, par exemple un matériau à base graphite vendu sous la marque commerciale ECOSORB.

La cellule 12 est munie de deux ouvertures 14 alignées qui peuvent laisser passage à l'étiquette 1. Les dimensions relatives de la cellule 12 et de l'étiquette 1 sont telles qu'un seul fil 2, 3 ou 4 puisse se trouver à la fois dans la cellule lorsque l'étiquette traverse la cellule de part en part.

En l'absence d'étiquettes dans la cellule, ou bien si la zone de l'étiquette comprise dans la cellule ne comporte pas de fil métallique, une grande partie de l'énergie rayonnée sous forme d'ondes électromagnétiques à haute fréquence par l'antenne 8 est absorbée par le garnissage de la cellule, et l'antenne 8 ne capte en retour qu'un très faible signal. Si, au contraire, un fil 3 est à l'intérieur de la cellule, le champ électromagnétique donne naissance à des courants de Foucault dans le fil qui émettra à nouveau, et l'antenne captera un signal différent qui sera dirigé par le coupleur directif 9 vers le détecteur 10. On pourra ainsi déceler la présence ou l'absence d'un fil métallique dans la zone considérée de l'étiquette. Mais en outre l'intensité de l'énergie réflechie sera d'autant plus importante que les courants de Foucault seront de plus forte intensité, cette intensité étant elle-même un fonction inverse de la résistivité du métal utilisé.

Par mesure de l'énergie réfléchie, équivalant à une mesure d'impédance de l'ensemble du système, ou par référence à des mesures faites avec des fils témoins d'étalonnage, on pourra donc identifier la nature du fil. On voit que si l'on donne par exemple des valeurs de codes respectivement 1, 2 et 3 aux trois nuances de fils citées plus haut, on pourra ainsi détecter le code 123 préalablement attribué ici à l'étiquette 1. Le marquage préalable d'une étiquette au moyen de m fils choisis parmi un échantillonnage de n types de résistivité différente, permettra donc de composer $n^m$ combinaisons.

Les figures 3 et 4 montrent des variantes de réalisation de cellules de détection. Dans les deux cas le champ haute fréquence est localisé dans le diélectrique 19 (ou 29) entre une plaque centrale 18 (ou 28) et les plaques extérieures 20 (ou 30).

Dans le cas de la figure 3, le bloc ainsi formé est percé par une fente 24 permettant le passage d'une étiquette 1 à travers les plaques et le diélectrique. Dans le cas de la figure 4, l'étiquette se déplace parallèlement aux plaques, dans une fente 34 entièrement formée dans le diélectrique. Bien entendu, les dimensions relatives de l'étiquette et de la cellule sont encore ici choisies de telle sorte qu'un seul fil puisse se présenter à la fois entre les plaques.

On pourra aussi accroître la puissance de codage sans avoir besoin de faire appel à un nombre accru de nuances de métaux ou d'alliages de résistivités électriques suffisamment différentes pour pouvoir être détectées sans ambiguïté.

On pourra par exemple utiliser des fils hétérogènes constitués par une âme d'une certaine nuance, entourée par un placage d'une nuance différente; on sait facilement obtenir actuellement de tels fils. On procèdera ensuite à la détection en utilisant successivement ou simultanément le passage dans deux champs électromagnétiques à haute fréquence, mais à des fréquences différentes et par exemple 3000 et 9000 MHz. On connaît en effet le phénomène de pénétration variable, et décroissante avec la fréquence, des ondes électromagnétiques dans un milieu conducteur, phénomène connu sous l'appellation "effet de peau". Ainsi un fil à âme en nickel de résistivité 7,2 $\mu\Omega$cm, plaqué par une zone extérieure en alliage fer-nickel de résistivité 63, offrira le même signal de réponse qu'un fil homogène en fer-nickel lorsque la fréquence sera suffisamment élevée pour que seule la partie périphérique extérieure du fil soit concernée par les courants induits; par contre, à plus basse fréquence, les réponses seront différentes.

On introduite donc ici un moyen supplémentaire d'identification en procédant deux fois, à des fréquences différentes, aux comparaisons des réponses avec celles produits par des fils étalons de référence. On pourra aussi procéder à de telles opérations en faisant varier les fréquences de façon continue dans une plage donnée au lieu de se limiter à deux fréquences fixes.

Toujours en vue d'augmenter la capacité de codage, on pourrait aussi faire varier le comportement d'un même fil dans un champ électromagnétique à haute fréquence. En soumettant par exemple le fil à une polarisation magnétique en même temps qu'au champ électromagnétique on modifiera sa perméabilité et la profondeur de pénétration des ondes, entrainant une modification des réponses. La comparaison des réponses, avec ou sans polarisation dans un champ de fréquence fixe, ou bien dans des champs de fréquences différentes, constituera un nouveau moyen d'identification.

On pourra aussi modifier la perméabilité du fil ou élevant sa température pendant les mesures, juste au dessus de son point de Curie.

Bien entendu l'invention n'est pas limitée aux modes de réalisation décrits à titre d'exemple, mais elle couvre aussi les réalisations qui n'en diffèrent que par des détails, par des variantes d'exécution ou l'utilisation de moyens équivalents. C'est ainsi que ce qui importe est le mouvement relatif de l'étiquette et de la cellule de détection pour que chaque fil soit analysé séparément, si bien que l'on pourrait aussi imaginer de faire déplacer la cellule devant ou autour de l'étiquette fixe.

## Revendications

1. Procédé de marquage et d'identification d'objets normalement non conducteurs de l'électricité, par inclusion préalable de masses conductrices et détection ultérieure de ces masses en faisant passer l'objet dans un champ électromagnétique produit par un générateur à haute fréquence, et mise en évidence de la variation de réponse du système, variation due aux courants de Foucault prenant alors naissance dans la masse conductrice, procédé dans lequel on amène successivement chacune des zones de l'objet (1) contenant un fil (2) à être, selon la même orientation, dans le champ électromagnétique et on mesure chaque réponse enregistré, caractérisé par le fait qu'on utilise comme éléments de marquage au moins un fil métallique (2) choisi chacun parmi une gamme prédéterminée d'échantillons de conductibilités électriques différentes, une valeur de code étant attribuée à la conductibilité de chaque échantillon, chaque réponse enregistrée étant alors caractéristique de la conductibilité de chaque échantillon, donc d'une valeur de code, le code complet de l'objet étant alors constitué par la succession des valeurs de code élémentaires détectées pour chaque fil (2).

2. Procédé selon revendication 1, caractérisé par le fait que pour le marquage on utilise des échantillons de fils (2) dont la résistivité est variable radialement, et par le fait que pour la détection on amène successivement chacune des zones contenant un fil à être dans au moins deux champs électromagnétiques de fréquences différentes, et on compare les réponses enregistrées pour chaque fréquence.

3. Procédé selon revendication 1, caractérisé par le fait que pour le marquage on utilise des échantillons de fils dont la résistivité est variable radialement, et par le fait que pour la détection on soumet successivement chacune des zones contenant un fil à un champ électromagnétique de fréquence variable, et on compare les réponses enregistrées sur la plage de variation des fréquences.

4. Procédé selon l'une quelconque des revendications 2 et 3, caractérisé par le fait qu'on utilise des fils hétérogènes avec une âme et un placage extérieur en métaux différents.

5. Procédé selon l'une quelconque des revendications 1, 2 ou 3, caractérisé par le fait que, pendant leur passage dans le ou les champs électromagnétiques, on soumet en outre les zones contenant les fils à une polarisation magnétique.

6. Procédé selon l'une quelconque des revendications 1, 2 ou 3, caractérisé par le fait que, pendant leur passage dans le ou les champs électromagnétiques, on soumet en outre les zones contenant les fils à un échauffement au-dessus du point de Curie de certaines nuances de l'échantillonnage.

## Patentansprüche

1. Verfahren zur Marierung und Erkennung von normalerweise nichtstromleitenden Gegenstände durch vorherigen Einschluß leitender Massen und nachträgliche Anzeige dieser Massen dadurch, daß der Gegenstand ein von einem Hochfrequenzgenerator erzeugtes elektromagnetisches Feld durchläuft, und Nachweis der Reaktionsänderung des Systems, wobei die Änderung auf die in der leitenden Masse dann entstehenden Wirbelströme zurückzuführen ist, Verfahren, bei welchem die jeweiligen Zonen des ein Draht (2) enthaltenden Gegenstandes (1) nacheinander gemäß der selben Ausrichtung das elektromagnetische Feld durchlaufen und jede aufgezeichnete Reaktion gemessen wird, dadurch gekennzeichnet, daß als Markierungselement mindestens ein aus einer vorbestimmten Serie Proben mit unterschiedlicher elektrischer Leitfähigkeit ausgewähltes Metalldraht (2) zur Anwendung kommt, und ein Schlusselwert der Leitfähigkeit jeder Probe zugeordnet wird, wobei jede aufgezeichnete Reaktion für die Leitfähigkeit einer jeden Probe, d.h. eines Schlüsselwertes kennzeichnend ist, sodaß die kompl. Code aus den für jedes Draht (2) nacheinander ermittelten Grundschlüsselwerte gebildet ist.

2. Verfahren nach Anspruch 1, dadurch gekennzeichnet, daß zur Markierung Drahtproben (2) mit einem radial veränderlichen spezifischen Widerstand zum Einsatz kommen, und daß zur Anzeige jeweils die ein Draht enthaltenden Zonen nacheinender mindestens zwei elektromagnetische Felder mit unterschiedlichen Frequenzen durchlaufen, wobei die für jede Frequenz aufgezeichnete Reaktion miteinander verglichen werden.

3. Verfahren nach Anspruch 1, dadurch gekennzeichnet, daß zur Markierung Drahtproben mit einem radial veränderlichen spezifischen Widerstand zum Einsatz kommen, und daß zur Anzeige jeweils die ein Draht enthaltenden Zonen nacheinander ein elektromagnetisches Feld mit veränderlicher Frequenz durchlaufen, wobei die in dem Frequenzschwankungsbereich aufgezeichneten Reaktionen verglichen werden.

4. Verfahren nach einem der Ansprüche 2 und 3, dadurch gekennzeichnet, daß verschiedenartige Drähte mit einer Drahtader und einer Aussenplattierung aus unterschiedlichen Metallen zur Anwendung kommen.

5. Verfahren nach einem der Ansprüche 1, 2 oder 3, dadurch gekennzeichnet, daß die die Drähte enthaltenden Zonen bei deren Durchlauf durch das oder die elektromagnetische Feld(er) ausserdem einer magnetischen Polarisierung unterliegen.

6. Verfahren nach einem der Ansprüche 1, 2 oder 3, dadurch gekennzeichnet, daß die die Drähte enthaltenden Zonen bei deren Durchlauf durch das oder die elektromagnetische Feld(er) über den Curiepunkt einiger Gütestufen der Probenauswahl erhitzt werden.

**Claims**

1. Process for labelling and identifying objects which are normally non-conductors of electricity, by prior inclusion of conducting masses and subsequent detection of these masses by passing the object through an electromagnetic field produced by a high-frequency generator, and by demonstration of the variation in response of the system, this variation being due to the Foucault currents then produced in the conducting mass, in which process each of the zones of the object (1) containing a wire (2) is successively brought, according to the same orientation, into the electromagnetic field, and each recorded response is measured, characterised in that at least one wire (2), chosen from a predetermined range of samples of different electrical conductivities, is used as the labelling element, a code value being assigned to the conductivity of each sample, each recorded response then being a characteristic of the conductivity of each sample and hence of a code value, and the complete code of the object then consisting of the succession of the elementary code values detected for each wire (2).

2. Process according to Claim 1, characterised in that the samples of wires (2) used for the labelling have a radially variable resistivity, and in that, for the detection, each of the zones containing a wire is successively brought into at least two electromagnetic fields of different frequencies, and the recorded responses are compared for each frequency.

3. Process according to Claim 1, characterised in that the samples of wires used for the labelling have a radially variable resistivity, and in that, for the detection, each of the zones containing a wire is successively subjected to an electromagnetic field of variable frequency, and the recorded responses are compared over the range of variation of the frequencies.

4. Process according to either one of Claims 2 and 3, characterised in that the wires used are heterogeneous wires with a core and an outer plating made of different metals.

5. Process according to any one of Claims 1, 2 or 3, characterised in that, during their passage through the electromagnetic field or fields, the zones containing the wires are also subjected to magnetic polarisation.

6. Process according to any one of Claims 1, 2 or 3, characterised in that, during their passage through the electromagnetic field or fields, the zones containing the wires are also subjected to heating above the Curie point for certain types of sampling.

0 022 390

FIG 1

FIG 2

FIG 3

FIG 4